# EUROPÄISCHE PATENTANMELDUNG

(11) **EP 4 825 179 A1**
(43) Veröffentlichungstag der Anmeldung: **21.10.2026**
(21) Anmeldenummer: 26162793.9
(22) Anmeldetag: 06.03.2026
(51) Int. Cl.: A21C 3/08

(54) **VORRICHTUNG UND VERFAHREN ZUM VERDREHEN VON TEIGSTÜCKEN**

(30) Priorität: 15.04.2025 DE 102025114761
(71) Anmelder: Fritsch Bakery Technologies GmbH & Co. KG, 97348 Markt Einersheim (DE)
(72) Erfinder: BERNHARDT, Udo, 97346 Iphofen (DE)
(74) Vertreter: Grünecker Patent- und Rechtsanwälte PartG mbB

(57) **Zusammenfassung**

Eine Vorrichtung (1) zum Verdrehen von Teigstücken (14) umfasst ein erstes Halteelement (2), das dazu konfiguriert ist, einen ersten Endabschnitt (12) eines zu verdrehenden Teigstücks (14) zu halten, und ein zweites Halteelement (3), das dazu konfiguriert ist, einen zweiten Endabschnitt (13) des zu verdrehenden Teigstücks (14) zu halten. Das erste Halteelement (2) ist relativ zu dem zweiten Halteelement (3) um eine erste Rotationsachse (33) rotierbar. Das erste Halteelement (2) umfasst einen ersten Halteförderer (4) und einen zweiten Halteförderer (5), wobei das erste Halteelement (2) dazu konfiguriert ist, den ersten Endabschnitt (12) des zu verdrehenden Teigstücks (14) zwischen dem ersten Halteförderer (4) und dem zweiten Halteförderer (5) zu halten.

## Beschreibung

Die Erfindung bezieht sich auf Vorrichtungen und Verfahren zum Verdrehen von Teigstreifen und mehrfachen Teigsträngen. Mit dieser Vorrichtung können Teigstreifen und Mehrfach-Teigstränge mit unterschiedlichem Querschnitt und Länge, mit und ohne Füllung und Bestreuung sowie unterschiedlicher Anzahl der Verdrehungen bei hoher Leistung hergestellt werden.

EP 0403217A1 offenbart eine Vorrichtung, bei dem durch ein Kurvenband und einer Wirkplatte Stränge getwistet werden. Dabei werden die unterschiedlichen Kurvengeschwindigkeiten des Kurvenbandes genutzt. Es können mit dieser Vorrichtung nur Stränge mit annähernd quadratischen Querschnitt verdreht werden.

DE 3903122C1 offenbart eine Vorrichtung mit Bändern, die mit unterschiedlichen Geschwindigkeiten und Drehrichtungen angetrieben werden. Es können auch mit dieser Vorrichtung nur Stränge mit annähernd quadratischen Querschnitt verdreht werden.

EP 2457443B1 offenbart eine aufwändige Vorrichtung die mit Greifeinheiten und Bändern arbeitet. Auch bei dieser Vorrichtung können hauptsächlich Stränge mit quadratischem Querschnitt verdreht werden. Nachteil der genannten Vorrichtungen ist, dass Teigstränge mit nur annähernd quadratischem Querschnitt verdreht werden können.

EP 2253215B1 offenbart eine Vorrichtung mit gegeneinander rotierenden Greifern und einen linearen Antrieb für die Greifer. Während der Linearbewegung der Greifer, vom Zufuhrband der zugeführten Teigstreifen zum Abführband der verdrehten Teigstreifen, werden die Teigstreifen durch die gegeneinander rotierenden Greifer verdreht. US 3522777 A offenbart auch eine Vorrichtung mit gegeneinander rotierenden Greifern. Ein Nachteil von Vorrichtungen mit Greifern ist, dass es zu Störungen durch Verklebung und Verschmutzung bei Teigsträngen mit Füllung kommen kann.

Aufgabe der vorliegenden Erfindung ist es, eine Vorrichtung sowie ein Verfahren zum Herstellen verdrehter Teigstreifen, insbesondere hinsichtlich der vorstehend im Zusammenhang mit dem Stand der Technik beschriebenen Nachteile, zu verbessern.

Es wird eine Vorrichtung zum Verdrehen von Teigstücken offenbart, wobei die Vorrichtung ein erstes Halteelement, das dazu konfiguriert ist, einen ersten Endabschnitt eines zu verdrehenden Teigstücks zu halten, und ein zweites Halteelement, das dazu konfiguriert ist, einen zweiten Endabschnitt des zu verdrehenden Teigstücks zu halten, umfasst. Das erste Halteelement ist relativ zu dem zweiten Halteelement um eine erste Rotationsachse rotierbar. Das erste Halteelement umfasst einen ersten Halteförderer und einen zweiten Halteförderer, wobei das erste Halteelement dazu konfiguriert ist, den ersten Endabschnitt des zu verdrehenden Teigstücks zwischen dem ersten Halteförderer und dem zweiten Halteförderer zu halten.

Das erste Halteelement kann relativ zu dem zweiten Halteelement derart rotierbar sein, dass der durch das erste Halteelement gehaltene erste Endabschnitt zusammen mit dem ersten Halteelement rotiert.

Vorzugsweise können der erste Halteförderer und/oder der zweite Halteförderer jeweils ein Endlosförderelement umfassen. Die Halteförderer, insbesondere die Endlosförderelemente können eine Struktur aufweisen. Durch eine Struktur kann ein sicheres Halten der Endabschnitte auch bei geringeren Klemmkräften ermöglicht werden. Es kann vorteilhaft sein, wenn die Struktur in Laufrichtung der Halteförderer, insbesondere der Endlosförderelemente verläuft, bspw. Rillen oder Nuten. Es ist auch eine Noppenstruktur möglich. Alternativ können die Halteförderer, insbesondere die Endlosförderelemente einen Stabgeflechtgurt umfassen. Diese können einen hohen Formschluss gegenüber den Endabschnitten bieten. Durch die große offene Fläche, die ca. 80% der Stabgeflechtgurte betragen kann, kann eine geringere Anhaftung und Verschmutzung durch die Endabschnitte ermöglicht werden.

Das zweite Halteelement kann relativ zu dem ersten Halteelement um eine zweite Rotationsachse rotierbar sein, vorzugsweise derart, dass der durch das zweite Halteelement gehaltene zweite Endabschnitt zusammen mit dem zweiten Halteelement rotiert. Das erste Halteelement und das zweite Halteelement können dazu konfiguriert, sein in entgegengesetzte Richtungen zu rotieren. Durch das Rotieren, insbesondere gleichzeitiges Rotieren, beider Halteelemente in entgegengesetzte Richtungen kann ein gewünschter Grad an Verdrehung schneller erreichbar sein.

Die erste Rotationsachse und die zweite Rotationsachse können parallel, vorzugsweise kollinear zueinander orientiert sein. Alternativ können die erste Rotationsachse und die zweite Rotationsachse einen Winkel einschließen, der kleiner als 180° und vorzugsweise größer als 100° ist. Bspw. können die erste Rotationsachse und die zweite Rotationsachse einen Winkel einschließen, der kleiner als 180° und vorzugsweise größer als 100° ist, wodurch eine durch ein Verdrehen in ein Teigstück eingebrachte Spannung beim Weiterfördern durch die Halteförderer reduziert werden kann.

Das zweite Halteelement kann einen dritten Halteförderer und einen vierten Halteförderer umfassen, wobei das zweite Halteelement dazu konfiguriert sein kann, den zweiten Endabschnitt des zu verdrehenden Teigstücks zwischen dem dritten Halteförderer und dem vierten Halteförderer zu halten. Das Vorsehen des dritten Halteförderers und des vierten Halteförderers kann unabhängig von der Rotierbarkeit des zweiten Halteelements sein. Vorzugsweise können der dritte Halteförderer und/oder der vierte Halteförderer jeweils ein Endlosförderelement umfassen. Die Halteförderer, insbesondere die Endlosförderelemente können eine Struktur aufweisen. Durch eine Struktur kann ein sicheres Halten der Endabschnitte auch bei geringeren Klemmkräften ermöglicht werden. Es kann vorteilhaft sein, wenn die Struktur in Laufrichtung der Halteförderer, insbesondere der Endlosförderelemente verläuft, bspw. Rillen oder Nuten. Es ist auch eine Noppenstruktur möglich. Alternativ können die Halteförderer, insbesondere die Endlosförderelemente einen Stabgeflechtgurt umfassen. Diese können einen hohen Formschluss gegenüber den Endabschnitten bieten. Durch die große offene Fläche, die ca. 80% der Stabgeflechtgurte betragen kann, kann eine geringere Anhaftung und Verschmutzung durch die Endabschnitte ermöglicht werden.

Einer, mehrere oder alle der Halteförderer können dazu konfiguriert sein, ein zwischen jeweils zwei von ihnen gehaltenes Teigstück quer, vorzugsweise orthogonal, zu der jeweiligen Rotationsachse zu fördern. Vorzugsweise können einer, mehrere oder alle der Halteförderer dazu konfiguriert sein, das Teigstück zu fördern bevor, während oder nachdem das erste Halteelement und/oder das zweite Halteelement rotiert wurde. Gleichzeitiges Rotieren und Fördern kann den Durchsatz der Vorrichtung erhöhen.

Der erste Halteförderer und der zweite Halteförderer, insbesondere deren Endlosförderelemente, können einen Spalt bilden. Entlang dieses Spalts können der erste und zweite Halteförderer, insbesondere deren Endlosförderelemente, im Wesentlichen parallel zueinander verlaufen. Der dritte Halteförderer und der vierte Halteförderer, insbesondere deren Endlosförderelemente können einen Spalt bilden. Entlang des Spalts können der dritte und vierte Halteförderer, insbesondere deren Endlosförderelemente, im Wesentlichen parallel zueinander verlaufen. In dem Spalt zwischen dem ersten und dem zweiten Halteförderer kann das zu verdrehende Teigstück, insbesondere der erste Endabschnitt, aufgenommen und gehalten und/oder eingeklemmt werden. In dem Spalt zwischen dem dritten und vierten Halteförderer kann das zu verdrehende Teigstück, insbesondere der zweite Endabschnitt, aufgenommen und gehalten und/oder eingeklemmt werden. Einer der beiden Spalte oder beide Spalte können einstellbar sein, bspw. um an unterschiedliche Produkte und Teigstücke angepasst zu werden.

Der erste Halteförderer und der zweite Halteförderer können mit unterschiedlichen Fördergeschwindigkeiten antreibbar sein. Alternativ oder zusätzlich können der dritte Halteförderer und der vierte Halteförderer mit unterschiedlichen Fördergeschwindigkeiten antreibbar sein. Dadurch können die Endabschnitte rotieren. Dies kann, insbesondere bei zwei- oder mehrlagigen Teigsträngen, eine Verbindung der Endabschnitte ermöglichen.

Die Vorrichtung kann des Weiteren eine Zuführeinrichtung umfassen. Alternativ oder zusätzlich kann die Vorrichtung eine Abführeinrichtung umfassen. Die Zuführeinrichtung und/oder die Abführeinrichtung können jeweils mindestens ein Förderband umfassen. Das Förderband oder eines der Förderbänder der Zuführeinrichtung kann in einen freien Bereich zwischen dem ersten Halteelement und dem zweiten Halteelement hineinragen. Zusätzlich oder alternativ kann das Förderband oder eines der Förderbänder der Abführeinrichtung in einen freien Bereich zwischen dem ersten Halteelement und dem zweiten Halteelement hineinragen.

Die Vorrichtung, insbesondere die Abführeinrichtung kann des Weitern eine Andrückeinrichtung umfassen. Die Andrückeinrichtung kann dazu konfiguriert sein, ein durch die Halteelemente verdrehtes Teigprodukt während dem Abführen zu fixieren. Bspw. kann die Andrückeinrichtung dazu konfiguriert sein, das verdrehte Teigprodukt an ein Förderband der Abführeinrichtung anzudrücken, während das Teigprodukt durch die Abführeinrichtung abgeführt wird. Dadurch kann ein Risiko, dass das verdrehte Teigprodukt sich durch Eigenspannungen wieder entdreht reduziert werden. Die Andrückeinrichtung kann z. B. eine Transporteinrichtung, die vorzugsweise ein oder mehrere Förderbänder umfassen kann, eine angetriebene Walze oder eine Welle mit Andrückscheiben umfassen.

Das erste Halteelement kann, vorzugsweise als Baugruppe zusammen mit dem ersten Halteförderer und dem zweiten Halteförderer, austauschbar sein. Besonders günstig kann es sein, wenn das erste Halteelement, wiederum vorzugsweise als Baugruppe zusammen mit dem ersten Halteförderer und dem zweiten Halteförderer, werkzeuglos austauschbar ist. Alternativ oder zusätzlich kann das zweite Halteelement, vorzugsweise als Baugruppe zusammen mit dem dritten Halteförderer und dem vierten Halteförderer, austauschbar sein. Besonders günstig kann es sein, wenn das zweite Halteelement, wiederum vorzugsweise als Baugruppe zusammen mit dem dritten Halteförderer und dem vierten Halteförderer, werkzeuglos austauschbar ist. Dadurch kann die Vorrichtung einerseits einfacher an unterschiedliche Teigprodukte und Einsatzmöglichkeiten anpassbar sein, bspw. durch Einsatz von unterschiedlichen Endlosförderelementen. Andererseits kann durch solche Austauschbarkeiten die Reinigung und Wartung der Vorrichtung und/oder der Halteelemente vereinfacht und/oder beschleunigt werden.

Die Vorrichtung kann des Weiteren einen oder mehrere Antriebe umfassen, die jeweils dazu konfiguriert sein können, das erste Halteelement, das zweite Halteelement sowie die Halteförderer anzutreiben. Vorzugsweise kann die Anzahl der Verdrehungen des Teigstück einstellbar sein, z. B. durch eine Steuervorrichtung, welche dazu konfiguriert sein kann, den Antrieb oder die Antriebe entsprechend zu steuern.

Die Erfindung bezieht sich auch auf ein Verfahren zum Verdrehen von Teigstücken durch eine Vorrichtung mit einem ersten Halteelement und einem zweiten Halteelement. Das Verfahren umfasst Halten eines ersten Endabschnitts des zu verdrehenden Teigstücks durch das erste Halteelement, wobei der erste Endabschnitt zwischen einem ersten Halteförderer und einem zweiten Halteförderer des ersten Halteelements gehalten wird. Das Verfahren umfasst des Weiteren Halten eines zweiten Endabschnitts des zu verdrehenden Teigstücks durch das zweite Halteelement und Rotieren des ersten Halteelements relativ zu dem zweiten Halteelement um eine erste Rotationsachse. Der erste Endabschnitt kann zusammen mit dem rotierenden Halteelement rotiert werden.

Der erste Halteförderer und/oder der zweite Halteförderer können ein Endlosförderelement umfassen. Die Halteförderer, insbesondere die Endlosförderelemente können eine Struktur aufweisen. Durch eine Struktur kann ein sicheres Halten der Endabschnitte auch bei geringeren Klemmkräften ermöglicht werden. Es kann vorteilhaft sein, wenn die Struktur in Laufrichtung der Halteförderer, insbesondere der Endlosförderelemente verläuft, bspw. Rillen oder Nuten. Es ist auch eine Noppenstruktur möglich. Alternativ können die Halteförderer, insbesondere die Endlosförderelemente einen Stabgeflechtgurt umfassen. Diese können einen hohen Formschluss gegenüber den Endabschnitten bieten. Durch die große offene Fläche, die ca. 80% der Stabgeflechtgurte betragen kann, kann eine geringere Anhaftung und Verschmutzung durch die Endabschnitte ermöglicht werden.

Das Verfahren kann des Weiteren Rotieren des zweiten Halteelements relativ zu dem ersten Halteelement um eine zweite Rotationsachse umfassen. Das erste Halteelement und das zweite Halteelement können in entgegengesetzte Richtungen rotiert werden. Durch das Rotieren, insbesondere gleichzeitiges Rotieren, beider Halteelemente in entgegengesetzte Richtungen kann ein gewünschter Grad an Verdrehung schneller erreichbar sein.

Vorzugsweise können die erste Rotationsachse und die zweite Rotationsachse parallel, vorzugsweise kollinear zueinander orientiert sein. Alternativ können die erste Rotationsachse und die zweite Rotationsachse einen Winkel einschließen, der kleiner als 180° und vorzugsweise größer als 100° ist. Bspw. können die erste Rotationsachse und die zweite Rotationsachse einen Winkel einschließen, der kleiner als 180° und vorzugsweise größer als 100° ist, wodurch eine durch ein Verdrehen in ein Teigstück eingebrachte Spannung beim Weiterfördern durch die Halteförderer reduziert werden kann.

Das Halten des zweiten Endabschnitts des zu verdrehenden Teigstücks durch das zweite Halteelement ein Halten des zweiten Endabschnitts zwischen einem dritten Halteförderer und einem vierten Halteförderer des zweiten Halteelements umfasst. Vorzugsweise können der dritte Halteförderer und/oder der vierte Halteförderer jeweils ein Endlosförderelement umfassen. Die Halteförderer, insbesondere die Endlosförderelemente können eine Struktur aufweisen. Durch eine Struktur kann ein sicheres Halten der Endabschnitte auch bei geringeren Klemmkräften ermöglicht werden. Es kann vorteilhaft sein, wenn die Struktur in Laufrichtung der Halteförderer, insbesondere der Endlosförderelemente verläuft, bspw. Rillen oder Nuten. Es ist auch eine Noppenstruktur möglich. Alternativ können die Halteförderer, insbesondere die Endlosförderelemente einen Stabgeflechtgurt umfassen. Diese können einen hohen Formschluss gegenüber den Endabschnitten bieten. Durch die große offene Fläche, die ca. 80% der Stabgeflechtgurte betragen kann, kann eine geringere Anhaftung und Verschmutzung durch die Endabschnitte ermöglicht werden.

Vorzugsweise kann das Verfahren des Weiteren Fördern des Teigstücks durch einen, mehrere oder alle der Halteförderer quer, vorzugsweise orthogonal, zu der jeweiligen Rotationsachse, bevor, während oder nachdem das erste Halteelement und/oder das zweite Halteelement rotiert wurde, umfassen. Es kann vorteilhaft sein, wenn einer, mehrere oder alle der Halteförderer das Teigstück gleichzeitig mit der Rotation der Halteelemente fördern. Durch gleichzeitiges Rotieren und Fördern kann der Durchsatz erhöht werden.

Der erste Halteförderer und der zweite Halteförderer können mit unterschiedlichen Fördergeschwindigkeiten angetrieben werden. Alternativ oder zusätzlich können der dritte Halteförderer und der vierte Halteförderer mit unterschiedlichen Fördergeschwindigkeiten angetrieben werden. Dadurch können die Endabschnitte rotieren. Dies kann, insbesondere bei zwei- oder mehrlagigen Teigsträngen, eine Verbindung der Endabschnitte ermöglichen.

Die Erfindung bezieht sich auf eine Vorrichtung sowie auf eine Verfahren der vorstehend beschriebenen Art. Im Folgenden werden Ausführungsformen beispielhaft anhand von Zeichnungen näher erläutert.
Figur 1 zeigt Beispiele einiger Produkte, deren Herstellung durch die Erfindung unterstützt werden kann.
Figur 2 zeigt eine Vorrichtung zum Verdrehen von Teigstücken in einer schematischen Vorderansicht.
Figur 3 zeigt jeweils drei schematische Seitenansichten von zwei Halteelementen der Vorrichtung aus Figur 1.
Figur 4 zeigt eine schematische Draufsicht von oben auf die Vorrichtung mit Zuführ- und Abführeinrichtung.
Figur 5A zeigt die Vorrichtung in einer teils geschnittenen schematischen Seitenansicht mit einer Abführvorrichtung gemäß einem Ausführungsbeispiel.
Figur 5B zeigt die Vorrichtung in einer teils geschnittenen schematischen Seitenansicht mit einer Abführvorrichtung gemäß einem weiteren Ausführungsbeispiel.
Figur 5C zeigt die Vorrichtung in einer teils geschnittenen schematischen Seitenansicht mit einer Zu- und Abführeinrichtungen gemäß einem weiteren Ausführungsbeispiel.
Figur 6 zeigt eine schematische, geschnittene Vorderansicht eines Halteelements mit dazugehörigen Antrieben.
Figur 7 zeigt eine schematische Draufsicht von oben eines Halteelements mit dazugehörigen Antrieben, wobei das Halteelement von den Antrieben getrennt ist.
Figur 8 zeigt eine schematische Draufsicht von oben der Halteelemente mit dazugehörigen Antrieben gemäß einem weiteren Ausführungsbeispiel.
Figur 9 zeigt schematische Schnittansichten und eine schematische Draufsicht von oben von Endlosförderelementen gemäß verschiedenen Ausführungsbeispielen.

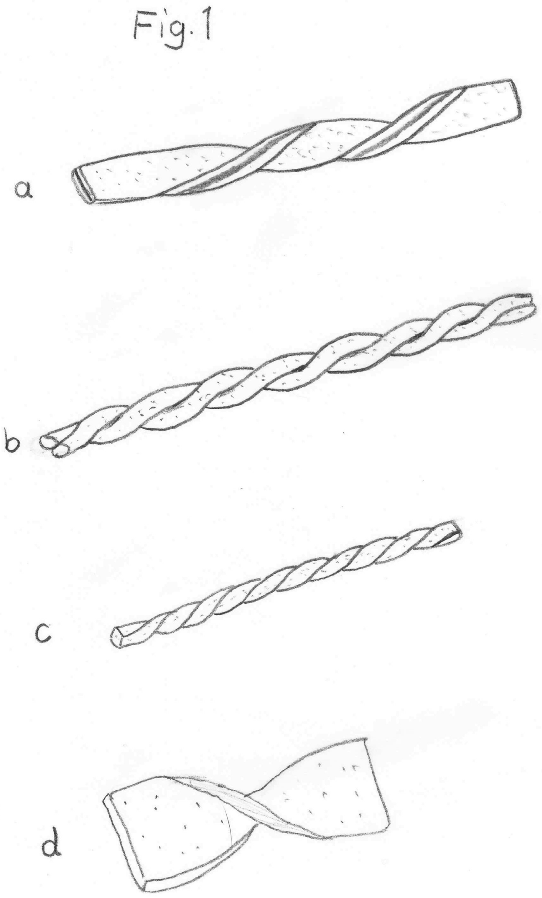

In Figur 1 sind Beispiele einiger Produkte, deren Herstellung durch die Erfindung unterstützt werden kann, dargestellt. Abbildung a zeigt eine perspektivische Ansicht eines verdrehten Teigprodukts umfassend zwei Teigstreifen mit einer Füllung zwischen den beiden Teigstreifen. Das Teigprodukt kann auch eine Bestreuung auf den Außenflächen aufweisen. Abbildung b zeigt eine perspektivische Ansicht eines verdrehten Teigprodukts, das mindestens zwei Teigstränge umfasst. Abbildung c zeigt eine perspektivische Ansicht eines verdrehten Teigstreifens mit quadratischem Querschnitt. Abbildung d zeigt eine perspektivische Ansicht eines verdrehten Teigstreifens mit rechteckigem Querschnitt und 180°-Verdrehung. Es sollte klar sein, dass bei rechteckigen und bei anderen Querschnitten auch andere Verdrehungswinkel denkbar sind.

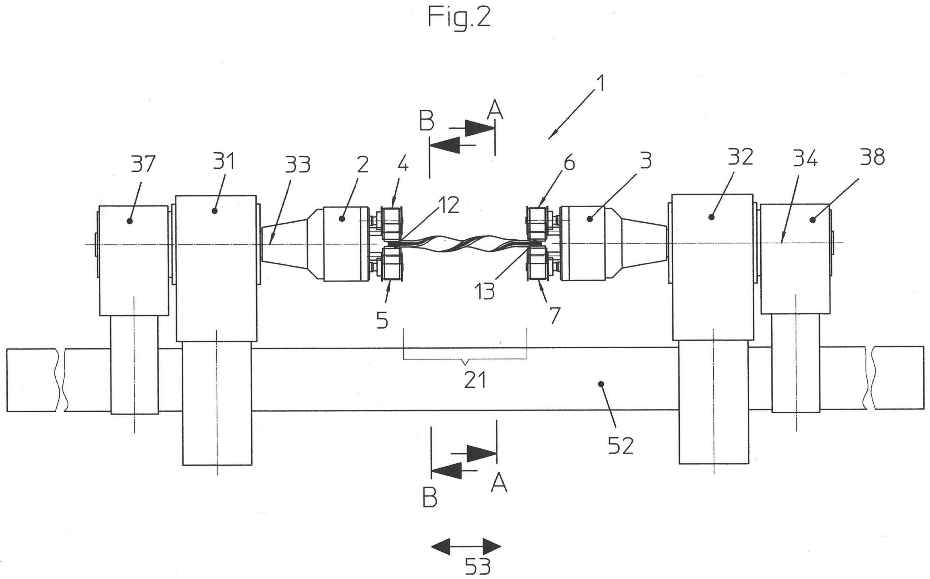

In Figur 2 ist eine Vorrichtung 1 zum Verdrehen von Teigstücken 14 in einer schematischen Vorderansicht dargestellt. Die Vorrichtung 1 kann, wie in dem abgebildeten Ausführungsbeispiel gezeigt, ein erstes Halteelement 2 und ein zweites Halteelement 3 umfassen. Das erste Halteelement 2 und das zweite Halteelement 3 können einander gegenüberliegend angeordnet sein. Das erste Haltelement 2 kann dazu konfiguriert sein, einen ersten Endabschnitt 12 des zu verdrehenden Teigstücks 14 zu halten. Das zweite Haltelement 3 kann dazu konfiguriert sein, einen zweiten Endabschnitt 13 des zu verdrehenden Teigstücks 14 zu halten.

Das erste Halteelement 2 kann relativ zu dem zweiten Halteelement 3 rotierbar sein. Das zweite Halteelement 3 kann relativ zu dem ersten Halteelement 2 rotierbar sein. Das erste Halteelement 2 und das zweite Halteelement 3 können dazu konfiguriert sein, in entgegengesetzte Richtungen zu rotieren. Es ist jedoch auch denkbar, dass lediglich eines der Halteelemente 2, 3 rotierbar ist und das andere rotationsfest ist. Das erste Halteelement 2 kann derart rotierbar sein, dass der durch das erste Halteelement 2 gehaltene erste Endabschnitt 12 zusammen mit dem ersten Halteelement 2 rotiert. Das zweite Halteelement 3 kann derart rotierbar sein, dass der durch das zweite Halteelement 3 gehaltene zweite Endabschnitt 13 zusammen mit dem zweiten Halteelement 3 rotiert. Durch das rotieren eines oder beider Halteelemente 2, 3 kann die Vorrichtung 1 dazu konfiguriert sein, das Teigstück 14 zu verdrehen.

Das erste Halteelement 2 kann, wie im vorliegenden Ausführungsbeispiel gezeigt, einen ersten Halteförderer 4 und einen zweiten Halteförderer 5 umfassen. Das zweite Halteelement 3 kann einen dritten Halteförderer 6 und einen vierten Halteförderer 7 umfassen. Der erste und der zweite Halteförderer 4, 5 können an einer Stirnseite des ersten Halteelements 2 angeordnet sein. Der dritte und der vierte Halteförderer 6, 7 können an einer Stirnseite des zweiten Halteelements 3 angeordnet sein. Die Halteförderer 4, 5, 6, 7 können jeweils antreibbar sein. Einer, mehrere oder alle der Halteförderer 4, 5, 6, 7 können jeweils ein Endlosförderelement 60, 61, 62, 63 umfassen. Wie im vorliegenden Ausführungsbeispiel gezeigt, können die Endlosförderelemente 60, 61, 62, 63 jeweils als Förderband ausgeführt sein.

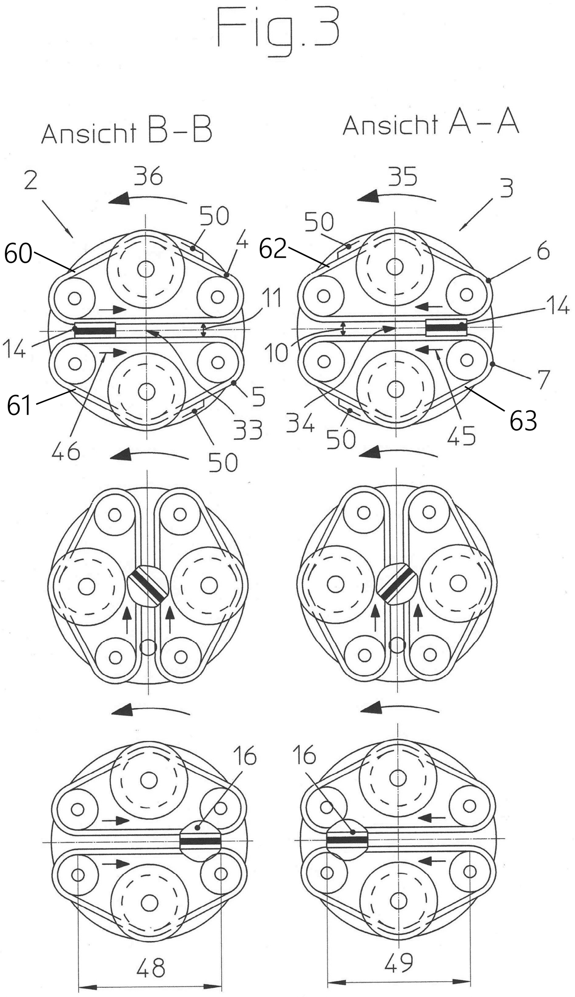

In Figur 3 ist das erste Halteelement 2 in drei schematischen Seitenansichten aus der in Figur 2 durch B-B angedeuteten Perspektive dargestellt. Des Weiteren ist das zweite Halteelement 3 in drei schematischen Seitenansichten aus der in Figur 2 durch A-A angedeuteten Perspektive dargestellt. Die drei Ansichten zeigen jeweils unterschiedliche Rotationspositionen der Halteelemente 2, 3. Es ist erkennbar, dass der erste Halteförderer 4 und der zweite Halteförderer 5, insbesondere die Endlosförderelemente 60, 61, einen Spalt 11 bilden können. Entlang des Spalts 11 können die Halteförderer 4, 5, insbesondere die Endlosförderelemente 60, 61, im Wesentlichen parallel zueinander verlaufen. Des Weiteren ist erkennbar, dass der dritte Halteförderer 6 und der vierte Halteförderer 7, insbesondere die Endlosförderelemente 62, 63, einen Spalt 10 bilden können. Entlang des Spalts 10 können die Halteförderer 6, 7, insbesondere die Endlosförderelemente 62, 63, im Wesentlichen parallel zueinander verlaufen. In dem Spalt 11 kann das zu verdrehende Teigstück 14, insbesondere der erste Endabschnitt 12, aufgenommen und gehalten und/oder eingeklemmt werden. In dem Spalt 10 kann das zu verdrehende Teigstück 14, insbesondere der zweite Endabschnitt 13, aufgenommen und gehalten und/oder eingeklemmt werden.

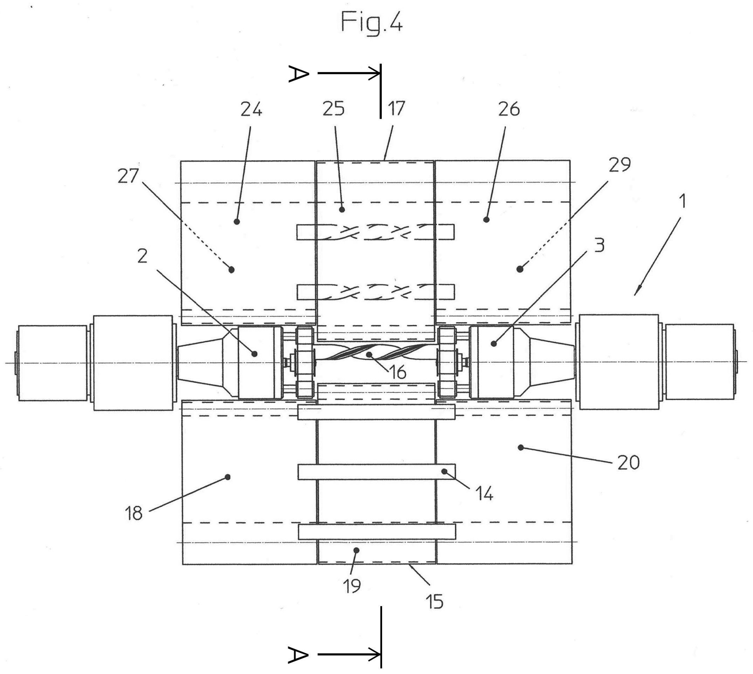

In Figur 4 ist Vorrichtung 1 in einer schematischen Draufsicht von oben dargestellt. Wie in Figur 4 erkennbar, kann die Vorrichtung 1 eine Zuführeinrichtung 15 umfassen. Die Zuführeinrichtung 15 kann dazu konfiguriert sein, das zu verdrehende Teigstück 14 an die Halteelemente 2, 3 heranzuführen. Die Zuführeinrichtung 15 kann mindestens ein Förderband 19 umfassen. Vorzugsweise, wie in Figur 4 gezeigt, kann die Zuführeinrichtung 15 drei Förderbänder 18, 19, 20 umfassen. Eines mehrere oder alle der Förderbänder 18, 19, 20 können antreibbar sein. Die Zuführeinrichtung 15 kann stufenförmig ausgebildet sein. Z. B. kann das mittlere Förderband 19 in einen freien Bereich 21 (siehe Figur 2) zwischen den Haltelementen 2, 3 hineinragen. Dadurch kann ein sicheres Erfassen und Übergeben des Teigstücks 14, insbesondere der Endabschnitte 12, 13, in die Spalte 10, 11 hinein unterstützen.

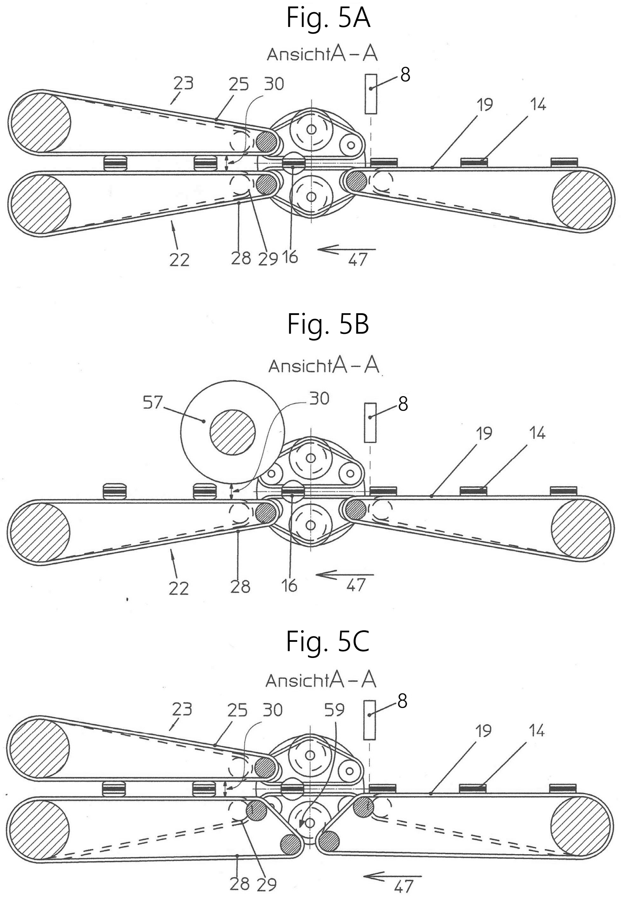

In Figur 4 ist des Weiteren erkennbar, dass die Vorrichtung 1 eine Abführeinrichtung 17 umfassen kann. Die Abführeinrichtung 17 kann dazu konfiguriert sein, ein durch Verdrehen des Teigstücks 14 entstandenes verdrehtes Teigprodukt 16 von den Halteelementen 2, 3 aufzunehmen. Die Abführeinrichtung 17 kann eine oder mehrere, im vorliegenden Ausführungsbeispiel zwei, Transporteinrichtungen 22, 23 umfassen (siehe Figuren 5A). Beispielsweise kann die Abführeinrichtung 17 eine untere Transporteinrichtung 22 und vorzugsweise eine obere Transporteinrichtung 23 umfassen. Jede der Transporteinrichtungen 22, 23 kann jeweils ein oder mehrere Förderbänder umfassen. Bspw. kann die untere Transporteinrichtung 22, wie in Figur 4 durch gestrichelte Linien gezeigt, drei Förderbänder 27, 28, 29 umfassen. Die obere Transporteinrichtung 23 kann ebenfalls drei Förderbänder 24, 25, 26 umfassen.

Das mittlere Förderband 28 der unteren Transporteinrichtung 22 kann in den Bereich 21 zwischen den Halteelementen 2, 3 hineinragen. Das mittlere Förderband 25 der oberen Transporteinrichtung 23 kann in den Bereich 21 zwischen den Halteelementen 2, 3 hineinragen. Optional kann die Zuführeinrichtung 15, bspw. das Förderband 19, höher relativ zu dem Spalt 10,11 der Halteelemente 2, 3 angeordnet sein als die Transporteinrichtung 22, bspw. das Förderband 28, der Abführeinrichtung 17. Dadurch kann Übergabe an die Transporteinrichtung 22 verbessert werden, da das verdrehte Teigprodukt 16 gegenüber dem zu verdrehenden Teigstück 14 einen größeren Querschnitt aufweist, der durch das Verdrehen entsteht. Die beiden übereinander angeordneten Transporteinrichtungen 22,23 können dazu dienen die verdrehen Teigprodukte 16 von den Halteelementen 2, 3 zu übernehmen und etwas anzudrücken bzw. zu fixieren um ein Entdrehen der Teigprodukte 16 zu verhindern. Es ist auch möglich auf die Transportbänder 24 und 26 zu verzichten, wenn es ausreicht, nur den verdrehten Bereich der Teigprodukte 16 anzudrücken.

In den Figuren 5A bis 5C ist die Vorrichtung 1 jeweils in einer schematischen Seitenansicht aus der in Figur 4 durch A-A angedeuteten Perspektive dargestellt. Die Figuren 5A bis 5C zeigen jeweils unterschiedliche Ausführungen der Abführeinrichtung 17. Wie in Figur 5B dargestellt, kann die Abführeinrichtung 17 anstelle des zum Andrücken verwendeten mittleren Förderbandes 25 als alternative Andrückeinrichtung eine angetriebenen Walze 57 oder eine Welle mit Andrückscheiben umfassen. Wie in Figur 5A erkennbar, kann ein Abstand 30 zwischen den Transporteinrichtungen 22, 23 einstellbar sein, bspw. um auf unterschiedliche Teigprodukte 16, wie sie in Figur 1 beispielhaft dargestellt sind, mit dem dafür erforderlichen Druck einzuwirken.

Bei weichen Teigen mit hohem Wasseranteil kann es von Vorteil sein, eines oder mehrere der mittleren Förderbänder 19, 28 der Zuführeinrichtung 15 bzw. der Abführeinrichtung 17, insbesondere der unteren Transporteinrichtung 22 im Übergabe- bzw. Drehbereich mit einem Stützbereich auszuführen, wie beispielhaft in Figur 5C gezeigt. Dazu können die Bänder 19, 28 im Übergabebereich verlängert und trichterartig 59 als Stützbänder ausgeführt werden. Das kann ermöglichen, dass besonders weiche Teige gestützt werden und sicher an das Förderband 28 übergegen werden.

Wie in Figur 2 erkennbar, können Rotationsbewegungen der Halteelemente 2, 3 um die Achsen 33 und 34 jeweils durch einen von zwei Antrieben 31,32 angetrieben werden. Beispielsweise kann das zweite Halteelement 3 um die Achse 34 in Richtung 35 (siehe Figur 3, Ansicht A-A) rotieren. Das erste Halteelement 2 kann beispielsweise um die Achse 33 in Richtung 36 rotieren siehe (Figur 3, Ansicht B-B). Wie in Figur 2 erkennbar, können die Förderbänder 4,5, 6,7 über Antriebe 37, 38 antreibbar sein. Die Antriebe 31, 37, 32, 38 können vorzugsweise Servomotoren sein.

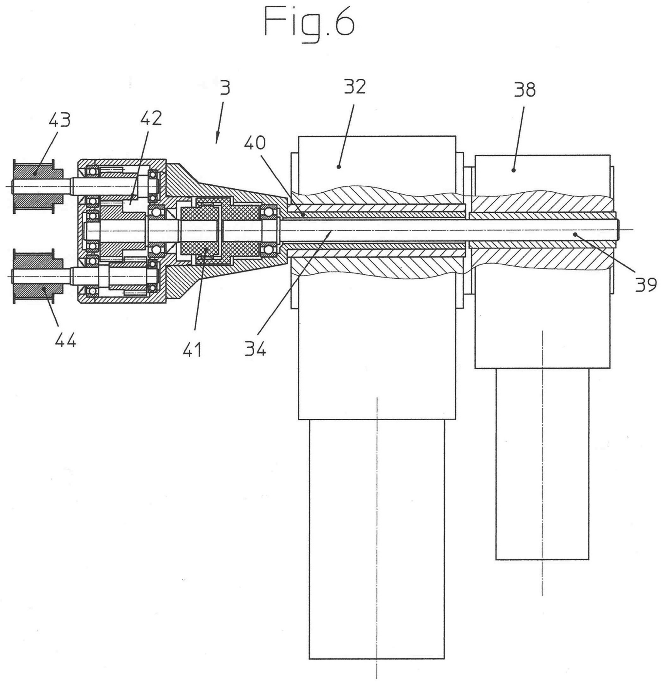

In Figur 6 ist das zweite Halteelement 3 und die Antriebe 32, 38 in einer schematischen Schnittansicht dargestellt. Es ist zu erkennen, dass der Antrieb der dritten und vierten Halteförderer 6,7 über eine Antriebswelle 39 erfolgen kann. Der Antrieb des zweiten Halteelements 3 kann über eine als Hohlwelle ausgebildete Antriebwelle 40 des Antriebes 32 erfolgen. Die Antriebswelle 39 kann durch die Antriebswelle 40 geführt werden. Die dritten und vierten Halteförderer 6, 7 können über den Antrieb 38 angetrieben werden, der formschlüssig mit der Welle 39 verbunden sein kann. Die dritten und vierten Halteförderer 6, 7 können über die Antriebswelle 39, eine Kupplung 41 sowie ein Zahnradgetriebe 42 und Antriebsrädern 43, 44, angetrieben werden. Die gleiche Antriebstechnik kann in Zusammenhang mit dem gegenüberliegenden ersten Halteelement 2 eingesetzt werden.

Durch den Antrieb 38 können die Förderbänder 6,7 in Richtung 45 (siehe Figur 3) angetrieben werden. Durch den Antrieb 37 können die Förderbänder 4,5 in Richtung 46 (siehe Figur 3) angetrieben werden. Das heißt, bei einer 360°-Umdrehung der Drehköpfe 2,3 in entgegengesetzter Richtung durch die Antriebe 31, 32 wird das zu verdrehende Teigstück 14 von der Zuführeinrichtung 15 in einer Richtung 47 (siehe Figur 5) auf die Abführeinrichtung 17 zu transportiert und dabei verdreht. Die Anzahl der Verdrehungen können dabei über die Anzahl der Drehungen der Antriebe 31, 32 bewerkstelligt werden. Die Anzahl der Drehungen und die Drehgeschwindigkeit der Antriebe 31, 32 können über eine nicht dargestellte Steuerung vorgegeben und gespeichert werden. Wie in Figur 3 ersichtlich, kann über die Antriebe 37, 38 der Vorschub der Halteförderer 4, 5 und 6, 7 so eingestellt werden, dass bei eingestellter Anzahl der Umdrehungen der Antriebe 31, 32 das Teigstück 14 durch die Halteförderer 4,5 und 6,7 durch den Bereich 48, 49 (siehe Figur 3) transportiert, und dabei gleichzeitig zum fertigen Teigprodukt 16 verdreht werden kann. Somit kann während der Verdrehung des Teigstücks 14 auch gleichzeitig der Transport von der Zuführeinrichtung 15 zur Abführeinrichtung 17 bewerkstelligt werden, was eine hohe Produktionsleistung gewährleisten kann.

Bei einer Rotation der Halteelemente 2, 3 um 180°durch die Antriebe 31, 32 können die Förderrichtungen der Halteförderer 4, 5 bzw. 6, 7 nach einer Rotation der Halteelemente 2, 3 um 90° umgekehrt werden, sodass die verdrehten Stränge 16 an die Abführeinrichtung 17 übergeben werden können. Besonders bei klebrigen Teigen und gefüllten Teigstreifen kann eine kontinuierliche Reinigung der Förderbänder 4,5,6,7 vorteilhaft sein, bspw. durch ein Abstreif-, Bürsten- oder alternatives Reinigungssystem 50. Durch eine programmierbare Steuerung der Antriebe 31, 32 kann die Anzahl der Teigstreifen-Verdrehungen einstellbar sein. Des Weiteren können die Antriebe 37, 38 über eine programmierbare Steuerung derart einstellbar sein, dass die Verdrehung der Teigstreifen 14 im Durchlauf oder in einem bestimmten Bereich, z. B. in einem Zentrum durchführen. Das kann möglich sein, wenn die Antriebe 31, 32 zu diesem Zeitpunkt mit synchroner Drehzahl zu den Antrieben 37, 38 betrieben werden. Es können auch weitere Betriebsarten gewählt werden, so kann z. B. nur eines der beiden Halteelemente 2,3 eine Rotationsbewegung ausführen.

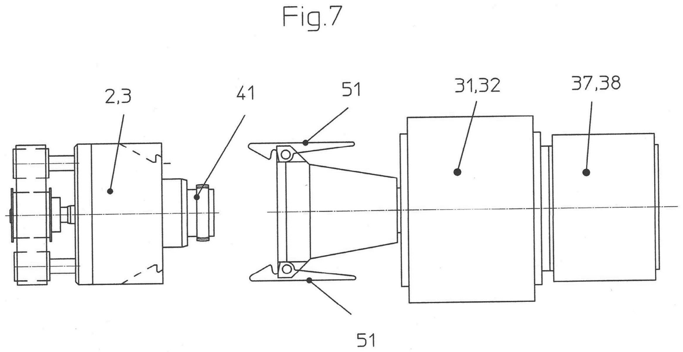

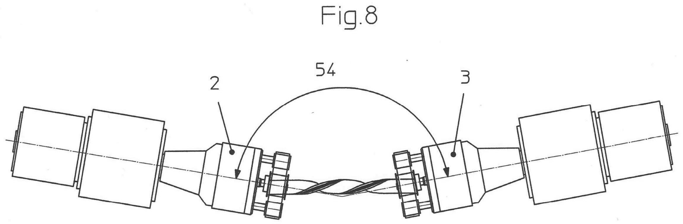

Ein weiterer Vorteil kann darin bestehen, dass wie in Figur 7 dargestellt, der vordere Teil der Halteelemente 2, 3 durch einen Verschluss 51 und die Kupplung 41 vom Antrieb 31, 32 trennbar sein können. Dadurch kann es ermöglicht werden, die Halteelemente 2,3 durch andere Halteelemente 2, 3 mit anderen Einstellungen zu ersetzen und/oder zum Reinigen oder zur Wartung einfach abzunehmen. Ein Abstand 53 (siehe Figur 2) zwischen den Halteelementen 2, 3 kann veränderbar sein. Z. B. können eines oder beide der Halteelemente 2, 3, vorzugsweise samt Antrieben, auf einer Linearführung 52 (siehe Figur 2) angeordnet sein. Dadurch kann ein Verdrehen von Teigstücken 14 mit unterschiedlicher Länge ermöglicht werden. Wie in Figur 8 dargestellt, können die Halteelemente 2, 3 derart zueinander angeordnet sein, dass die erste Rotationsachse 33 und die zweite Rotationsachse 34 einen Winkel 54 einschließen, der kleiner als 180° ist. Dadurch kann auch ein Schrumpfen beim Verdrehen der Teigstücke 14 kompensiert werden. Somit kann eine Verringerung der Länge der Teigstücke 14 während der Verdrehung ausgeglichen werden.

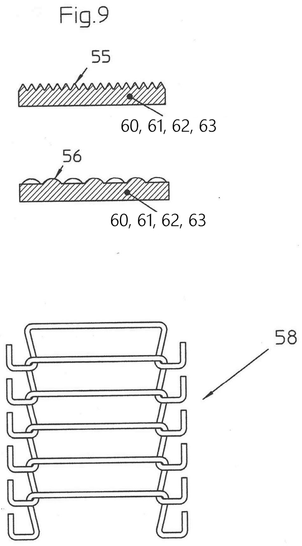

Um den Anpressdruck auf die Endabschnitte 12,13 der zu verdrehenden Teigstücke 14 möglichst gering zu halten, kann es vorteilhaft sein, wenn die Halteförderer 4, 5 und 6, 7, insbesondere die Endlosförderelemente 60, 61, 62, 63, eine Struktur 55, 56 (siehe Figur 9) aufweisen. Es kann vorteilhaft sein, wenn die Struktur 55 in Laufrichtung der Halteförderer 4, 5 und 6, 7, insbesondere der Endlosförderelemente 60, 61, 62, 63, verläuft. Es ist auch eine Noppenstruktur 56 möglich. Alternativ können die Halteförderer 4,5 und 6,7, insbesondere die Endlosförderelemente 60, 61, 62, 63 einen Stabgeflechtgurt 58 (siehe Figur 9) umfassen. Diese können einen hohen Formschluss gegenüber den Endabschnitten 12,13 bieten. Durch die große offene Fläche, die ca. 80% der Stabgeflechtsgurte 58 betragen kann, kann eine geringere Anhaftung und Verschmutzung durch die Endabschnitte 12, 13 ermöglicht werden. Die Spalte 10, 11 zwischen den Halteförderern 4,5 bzw. 6,7 können jeweils einstellbar sein. Dadurch können die Spalte 10, 11 an unterschiedliche Stärken der Teigstücke 14 anpassbar sein und somit ein sicheres Halten der Teigstücke 14 während der Verdrehung gewährleisten.

Um einen sicheren Produktionsablauf zu gewährleisten, können die Antriebe 31, 32 und 37, 38 über eine nicht dargestellte Steuerung gesteuert werden. Über einen Sensor 8 (siehe Figur 5) kann das über die Zuführeinrichtung 15 zugeführte Teigstück 14 detektiert bzw. erfasst und über eine Steuerung der Verdrehvorgang über die Antriebe 31, 32, 37, 38 eingeleitet werden. Das kann einen gesteuerten Produktionsablauf ermöglichen, auch wenn die Teigstreifen 14 mit unterschiedlichen Taktabstand und Geschwindigkeit zugeführt werden. Die nicht dargestellte Steuerung kann dazu konfiguriert sein, unterschiedliche Taktabstände der ankommenden Teigstreifen 14 auszugleichen, bspw. so dass die fertig verdrehten Teigprodukte 16 nach Verlassen der Vorrichtung 1 gleichmäßige Taktabstände aufweisen.

Um die Endabschnitte 12, 13 von zwei bzw. mehrfachen Teigsträngen, wie sie z. B. in Figur 1, Abbildung b dargestellt sind, zwischen den Halteförderern 4, 5 bzw.6, 7 miteinander zu verbinden, kann es vorteilhaft sein, den ersten und den zweiten Halteförderer 4, 5 bzw. den dritten und den vierten Halteförderer 6, 7 jeweils mit unterschiedlicher Transportgeschwindigkeit anzutreiben. Wird jeweils einer der beiden Halteförderer 4,5 bzw. 6,7 mit geringerer Transportgeschwindigkeit oder in entgegengesetzter Transportrichtung angetrieben, beginnen die Endabschnitte 12,13 zu rotieren. Dies kann eine Verbindung der Endabschnitte ermöglichen. Die Vorrichtung 1 kann auch dazu konfiguriert sein, einen der Halteförderer 4,5 bzw. 6,7 nicht anzutreiben. Durch die eingestellte Geschwindigkeitsdifferenz zwischen dem ersten und dem zweiten Halteförderer 4, 5 bzw. zwischen dem dritten und dem vierten Halteförderer 6, 7 kann die Anzahl der Drehungen der Endabschnitte eingestellt werden. Die Differenzgeschwindigkeit der jeweiligen Transportbänder kann insbesondere so eingestellt werden, dass ein Transport der Teigstücke 14 in der Richtung 47 erfolgt.

## Patentansprüche

1. Vorrichtung (1) zum Verdrehen von Teigstücken (14), wobei die Vorrichtung (1) umfasst:
ein erstes Halteelement (2), das dazu konfiguriert ist, einen ersten Endabschnitt (12) eines zu verdrehenden Teigstücks (14) zu halten,
ein zweites Halteelement (3), das dazu konfiguriert ist, einen zweiten Endabschnitt (13) des zu verdrehenden Teigstücks (14) zu halten,
wobei das erste Halteelement (2) relativ zu dem zweiten Halteelement (3) um eine erste Rotationsachse (33) rotierbar ist, und
wobei das erste Halteelement (2) einen ersten Halteförderer (4) und einen zweiten Halteförderer (5) umfasst, wobei das erste Halteelement (2) dazu konfiguriert ist, den ersten Endabschnitt (12) des zu verdrehenden Teigstücks (14) zwischen dem ersten Halteförderer (4) und dem zweiten Halteförderer (5) zu halten.

2. Vorrichtung nach Anspruch 1, wobei das erste Halteelement (2) relativ zu dem zweiten Halteelement (3) derart rotierbar ist, dass der durch das erste Halteelement (2) gehaltene erste Endabschnitt (12) zusammen mit dem ersten Halteelement (2) rotiert.

3. Vorrichtung nach einem der vorangehenden Ansprüche, wobei der erste Halteförderer (4) und/oder der zweite Halteförderer (5) jeweils ein Endlosförderelement (60, 61) umfasst.

4. Vorrichtung nach einem der vorangehenden Ansprüche, wobei das zweite Halteelement (3) relativ zu dem ersten Halteelement (2) um eine zweite Rotationsachse (34) rotierbar ist, vorzugsweise derart, dass der durch das zweite Halteelement (3) gehaltene zweite Endabschnitt (13) zusammen mit dem zweiten Halteelement (3) rotiert.

5. Vorrichtung nach Anspruch 4, wobei die erste Rotationsachse (33) und die zweite Rotationsachse (34) parallel, vorzugsweise kollinear zueinander orientiert sind, oder wobei die erste Rotationsachse (33) und die zweite Rotationsachse (34) einen Winkel einschließen, der kleiner als 180° und vorzugsweise größer als 100° ist.

6. Vorrichtung nach einem der vorangehenden Ansprüche, wobei das zweite Halteelement (3) einen dritten Halteförderer (6) und einen vierten Halteförderer (7) umfasst, wobei das zweite Halteelement (3) dazu konfiguriert ist, den zweiten Endabschnitt (13) des zu verdrehenden Teigstücks (14) zwischen dem dritten Halteförderer (6) und dem vierten Halteförderer (7) zu halten.

7. Vorrichtung nach Anspruch 6, wobei der dritte Halteförderer (6) und/oder der vierte Halteförderer (7) jeweils ein Endlosförderelement (62, 63) umfasst.

8. Vorrichtung nach einem der vorangehenden Ansprüche, wobei einer, mehrere oder alle der Halteförderer (4, 5, 6, 7) dazu konfiguriert sind, ein zwischen jeweils zwei von ihnen gehaltenes Teigstück (14) quer, vorzugsweise orthogonal, zu der jeweiligen Rotationsachse (33. 34) zu fördern.

9. Vorrichtung nach einem der vorangehenden Ansprüche, wobei der erste Halteförderer (4) und der zweite Halteförderer (5) mit unterschiedlichen Fördergeschwindigkeiten antreibbar sind und/oder der dritte Halteförderer (6) und der vierte Halteförderer (7) mit unterschiedlichen Fördergeschwindigkeiten antreibbar sind.

10. Verfahren zum Verdrehen von Teigstücken (14) durch eine Vorrichtung (1) mit einem ersten Halteelement (2) und einem zweiten Halteelement (3), wobei das Verfahren umfasst:
Halten eines ersten Endabschnitts (12) des zu verdrehenden Teigstücks (14) durch das erste Halteelement (2), wobei der erste Endabschnitt (12) zwischen einem ersten Halteförderer (4) und einem zweiten Halteförderer (5) des ersten Halteelements (2) gehalten wird,
Halten eines zweiten Endabschnitts (13) des zu verdrehenden Teigstücks (14) durch das zweite Halteelement (3),
Rotieren des ersten Halteelements (2) relativ zu dem zweiten Halteelement (3) um eine erste Rotationsachse (33).

11. Verfahren nach Anspruch 10, wobei der erste Endabschnitt (12) zusammenmit dem rotierenden Halteelement (2) rotiert wird.

12. Verfahren nach einem der Ansprüche 10 oder 11, wobei der erste Halteförderer (4) und/oder der zweite Halteförderer (5) jeweils ein Endlosförderelement (60, 61) umfasst.

13. Verfahren nach einem der Ansprüche 10 bis 12, des Weiteren umfassend Rotieren des zweiten Halteelements (3) relativ zu dem ersten Halteelement (2) um eine zweite Rotationsachse (34).

14. Verfahren nach Anspruch 13, wobei die erste Rotationsachse (33) und die zweite Rotationsachse (34) parallel, vorzugsweise kollinear zueinander orientiert sind, oder wobei die erste Rotationsachse (33) und die zweite Rotationsachse (34) einen Winkel einschließen, der kleiner als 180° und vorzugsweise größer als 100° ist.

15. Verfahren nach einem der Ansprüche 10 bis 14, wobei das Halten des zweiten Endabschnitts (13) des zu verdrehenden Teigstücks (14) durch das zweite Halteelement (3) ein Halten des zweiten Endabschnitts (13) zwischen einem dritten Halteförderer (6) und einem vierten Halteförderer (7) des zweiten Halteelements (3) umfasst.
